# EUROPEAN PATENT APPLICATION

(11) **EP 4 254 820 A1**
(43) Date of publication of application: **04.10.2023**
(21) Application number: 22165496.5
(22) Date of filing: 30.03.2022
(51) Int. Cl.: H04B 7/155

(54) **METHOD AND BYPASS-SYSTEM FOR BYPASSING BLOCKADES OR DETERIORATIONS OF WIRELESS LINE-OF-SITE-COMMUNICATION PATHS**

(71) Applicant: Siemens Aktiengesellschaft, 80333 München (DE)
(72) Inventor: Michailow, Nicola, 81825 München (DE); Kornbichler, Andreas, 83623 Dietramszell (DE); Zöpfl, Wendelin, 80333 München (DE)
(74) Representative: Siemens Patent Attorneys

(57) **Abstract**

In order to bypass an upcoming blockade (BLC) or deterioration (DTR) of a wireless "Line-of-site <LOS>"-communication path (CP_{WLOS}) within a wireless communication environment (WCE) of two transceiver (TRC1, TRC2) communicating via the wireless "Line-of-site <LOS>"-communication path (CP_{WLOS}), by which preemptively the upcoming blockade or deterioration of the wireless "Line-of-site <LOS>"-communication path (CP_{WLOS}), when the upcoming blockade (BLC) or deterioration (DTR) is announced itself, is bypassed before the wireless "Line-of-site <LOS>"-communication is getting lost, it is proposed
(i) to deploy (dpl) at least one controllable appliance (APL_{c}, APL_{c,s}) functioning as an electromagnetic mirror including each a reconfigurable intelligent surface (RIS) known from the prior art and being adjustable in direction to two transceiver (TRC1, TRC2) and
(**ii**) to control (crt), based on generation data (GRD) being generated (grt), the two transceiver (TRC1, TRC2) affected in their communication via the wireless "Line-of-site <LOS>"-communication paths (CP_{WLOS}) by the upcoming blockade (BLC) or deterioration (DTR) and a selected controllable appliance (APL_{c,s}) of the at least one controllable appliance (APL_{c}, APL_{c,s}) to be most suitable for the bypassing such that between the two transceiver (TRC1, TRC2) via the selected controllable appliance (APL_{c,s}) two backup wireless "Line-of-site <LOS>"-communication paths (CP_{WLOS,b}) are set up instead of the upcoming blocked (BLC) or deteriorated (DTR) wireless "Line-of-site <LOS>"-communication path (CP_{WLOS}) for a limited time, in particular for the duration of the blockade (BLC) or deterioration (DTR).

## Description

The invention refers to a method for bypassing blockades or deteriorations of wireless "Line-of-site <LOS>"-communication paths according to the preamble claim 1 and a bypass-system for bypassing blockades or deteriorations of wireless "Line-of-site <LOS>"-communication paths according to the preamble claim 7.

Wireless communication systems operating in frequencies beyond 6 GHz depend on "Multiple Input Multiple Output <MIMO>" and beamforming to compensate increasing path loss.

According to https://www.sdxcentral.com/5g/definitions/what-is-5g-spectrum/ the 5G-spectrum is a range of radio frequencies in the sub-6 GHz-range and the millimeter-wave (mm-Wave) frequency range that is 24,25 GHz and above.

The 5G-spectrum refers to the radio frequencies that carry data from user equipment <UE> to cellular base stations to the data's endpoint. "Long Term Evolution <LTE>"-networks use frequencies in the sub-6 GHz-range and will be sharing the space with 5G-traffic. The lower frequency bands will be used for less-densely populated areas because data can travel further, though slower, on these frequencies.

According to the standards body, 3GPP, the radio frequency spectrum used by LTE-networks ranges from 700 MHz to 2,7 GHz. In theory, LTE peak data rates are 75 Mb/s for the uplink and 300 Mb/s for the downlink when using the "Multiple Input Multiple Output <MIMO>" antenna system, also referred to as spatial multiplexing.

The frequency bands for 5G-networks come in two sets. Frequency range 1 <FR1> is from 450 MHz to 6 GHz, which includes the LTE-frequency range. Frequency range 2 <FR2> is from 24,25 GHz to 52,6 GHz. The sub-6 GHz range is the name for FR1, and the mm-Wave spectrum is the name for FR2.

In theory, the peak data rates for a fully mature 5G network are 20 Gb/s downlink and a 10 Gb/s uplink, as standardized by the "International Telecommunications Union <ITU>".

5G- and LTE-networks share LTE's frequencies because the 5G-network is not wholly and immediately replacing the LTE-network. A network operator can use "Frequency Division Duplex <FDD>" and "Time Division Duplex <TDD>" technologies to share spectrum. FDD is where different bands of frequency are used by users; one for uplink and the other for downlink. TDD is where one frequency band will be used for uplink and downlink, switching between the two from moment to moment.

In order to utilize the newly available mm-Wave spectrum, 5G-networks will have to use the 5G New Radio technology being standardized by the standards body 3GPP.

Such systems yield highest communication performance with respect to data rate, latency, and reliability when signal paths between transmitter and receiver, called as transceiver, are "line-of-sight <LOS>".

The most important aspect of mm-Wave frequencies is the fact that, the wavelength becomes smaller. Smaller wavelength means antenna elements in an antenna array become smaller. More antenna elements in a given antenna size (area) means that beamforming algorithms can produce narrower (=directed) beams. This makes "Line-of-site <LOS>"-communication very important for mm-Wave communication links.

"Non-Line-of-site <NLOS>"-communication or "Non-Line-of-site <NLOS>"-communication paths can also be used, but it is not preferred, because (i) they might be hard to plan for in a dynamic environment (the transmitting transceiver needs to work with what is available around it) and (**ii**) "Non Line-of-site <NLOS>"-communication paths are always longer than "Line-of-site <LOS>"-communication paths, which means the signal is attenuated stronger. Plus, the reflection off a wall destroys or "eats" some signal strength, too.

For this reason, if in the following in the context of the present invention a "Line-of-site <LOS>"-communication or a "Line-of-site <LOS>"-communication path is mentioned that with it is besides the classical "Line-of-site <LOS>"-communication or the classical "Line-of-site <LOS>"-communication path also included a dominant "Non Line-of-site <NLOS>"-communication of the "Non Line-of-site <NLOS>"-communication or a dominant "Non Line-of-site <NLOS>"-communication path of the "Non Line-of-site <NLOS>"-communication path.

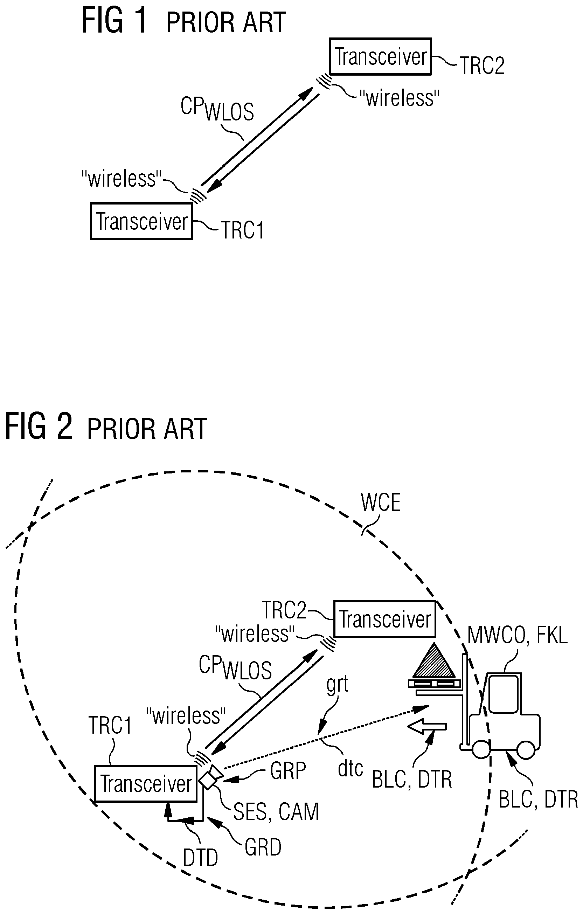

FIGURE 1 shows -as prior art - a normal line-of-sight communication scenario with a setup, which includes two transceiver, a first transceiver TRC1 and a second transceiver TRC2, communicating via a wireless communication link in the form of a wireless "Line-of-site <LOS>"-communication path CP_{WLOS}.

With growing carrier frequency, wireless signals are increasingly susceptible to blockage or deterioration by moveable wireless communication obstacles such as solid objects like pedestrians, vehicles like a forklift, foliage of trees and atmospheric conditions like rain, fog, etc.

Traditionally, when the performance of the wireless communication link or wireless "Line-of-site <LOS>"-communication path CP_{WLOS} decreases, there are several general measures that can be taken.

So, it is possible to increase transmit power, reduce order of modulation, reduce code rate.

In addition, beamforming capable systems can try to find an alternative communication path, e.g., by beam search.

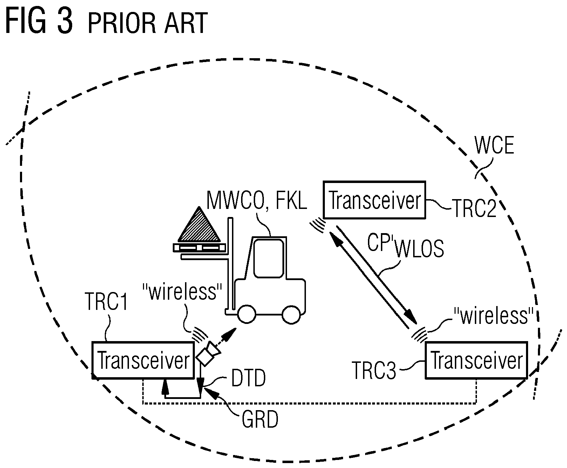

Lastly, a handover to a further transceiver, for example a base station, an access point etc., at a different location can be performed (cf. FIGURE 3).

According to the non-patent literature https://arxiv.org/pdf/2010.06188v1.pdf with the title "When Wireless Communications Meet Computer Vision in Beyond 5G" it is proposed a method to predict an upcoming blockage of a wireless communication link by moving physical objects (e.g., pedestrians) by using a camera.

FIGURE 2 shows -as prior art - based on the FIGURE 1 this well-known scenario. In order to predict an upcoming blockade BLC or deterioration DTR of the wireless "Line-of-site <LOS>"-communication path CP_{WLOS}, via which the two transceiver TRC1, TRC2 communicate with each other, a detection unit DTU, preferably designed as a sensor SES or a camera CAM, is assigned to the first transceiver TRC1 to monitor a wireless communication environment WCE of two transceiver TRC1, TRC2 communicating via the wireless "Line-of-site <LOS>"-communication path CP_{WLOS}. The wireless communication environment WCE of the two transceiver TRC1, TRC2 is preferably given by an overlap area of two radio ranges of the transceivers TRC1, TRC2. When a moveable wireless communication obstacle MWCO, which could be a solid object like a pedestrian, a vehicle like a forklift FKL as in the present case, foliage of trees and atmospheric conditions like rain, fog, etc., this moveable wireless communication obstacle MWCO, which is approaching the wireless "Line-of-site <LOS>"-communication path CP_{WLOS} and which might be able to blockade by representing the blockade BLC or to deteriorate by representing the deterioration DTR this wireless communication link, is detected dtc by the detection unit DTC respectively the sensor SES or camera. Due to this detection the detection unit DTC is generating grt detection data DTD. This detection DTD can be advantageously transferred to the first transceiver TRC1 but also to the second transceiver TRC2 for further processing (cf. FIGURE 3).

More generally considered the detection unit DTC generating grt the detection data DTD is a generating part GRP generating grt generation data GRD about the upcoming blockade BLC or deterioration DTR.

To overcome this blockade BLC or deterioration DTR of the wireless "Line-of-site <LOS>"-communication path CP_{WLOS} a countermeasure against the blockade BLC or deterioration DTR is proposed in the non-patent literature https://arxiv.org/pdf/2010.06188v1.pdf.

According to this proposal, based on the scenario in the FIGURE 2 and depicted in FIGURE 3 the wireless "Line-of-site <LOS>"-communication path CP_{WLOS}, which is blockaded or deteriorated by the moveable wireless communication obstacle MWCO respectively the forklift FKL, is handed over to a further transceiver, a third transceiver TRC3. Due to this handover the blockaded or deteriorated wireless "Line-of-site <LOS>"-communication path CP_{WLOS} is replaced by a modified wireless "Line-of-site <LOS>"-communication path CP'_{WLOS} via which the second transceiver TRC2 is communicating with the third transceiver TRC3 instead of the first transceiver TRC 1. By this handover to the third transceiver TRC3 modified wireless "Line-of-site <LOS>"-communication path CP'_{WLOS} is not obstructed.

Furthermore, from the non-patent literature https://arxiv.org/pdf/1906.09490.pdf with the title "Wireless Communications Through Reconfigurable Intelligent Surfaces" it is known in addition that a "reconfigurable intelligent surface <RIS>" is used to overcome an upcoming blockade or deterioration of a wireless "Line-of-site <LOS>"-communication path.

It is an objective of the invention to propose a method and a bypass-system for bypassing blockades or deteriorations of wireless "Line-of-site <LOS>"-communication paths, by which preemptively upcoming blockades or deteriorations of wireless "Line-of-site <LOS>"-communication paths are bypassed before the wireless "Line-of-site <LOS>"-communication is getting lost.

This invention presents a way to avoid the loss of wireless "Line-of-site <LOS>"-communication links caused by physical or natural objects and allows the communication system to work with such "Non Line-of-site <NLOS>"-communication paths in a controlled and optimized way.

The objective is solved with regard to a method defined in the preamble of claim 1 by the features in the characterizing part of claim 1.

The objective is further solved with regard to a bypass-system defined in the preamble of claim 7 by the features in the characterizing part of claim 7.

The main idea of the invention according to the claims 1 and 7 thereby improving the state of the art disclosed above, bypassing an upcoming blockade or a deterioration of a wireless "Line-of-site <LOS>"-communication path within a wireless communication environment of two transceiver communicating via the wireless "Line-of-site <LOS>"-communication path, when the upcoming blockade or deterioration is announced itself, is
(i) to deploy at least one controllable appliance functioning as an electromagnetic mirror including each a reconfigurable intelligent surface known from the prior art and being adjustable in direction to the two transceiver and
(**ii**) to control, based on generation data being generated, the transceiver affected in their communication via the wireless "Line-of-site <LOS>"-communication paths by the upcoming blockade or deterioration and a selected controllable appliance of the at least one controllable appliance to be most suitable for the bypassing such that
   between the two transceiver via the selected controllable appliance two backup wireless "Line-of-site <LOS>"-communication paths are set up instead of the upcoming blocked or deteriorated wireless "Line-of-site <LOS>"-communication path for a limited time, in particular for the duration of the blockade or deterioration.

In a nutshell the basic considerations are to fabricate alternative communication or signal paths based on context information about a physical environment in a beamforming communication scenario, wherein the paths are deployed preemptively before the "line-of-sight <LOS>" is lost.

In contrast to the traditional handover procedure (cf. FIGURE 3), which is reactive, such that countermeasures are initiated after adversarial effects, like degradation of data rate, latency, reliability, etc., occur on the wireless communication link or the wireless "Line-of-site <LOS>"-communication path, the proposed approach utilizes context information about the physical environment to predict an upcoming blockade or deterioration of the wireless "Line-of-site <LOS>"-communication path and preemptively create an unaffected communication or signal link. Hence it improves communication service continuity, which is particularly important for safety-critical and industrial control applications.

Another option would be to use a classical relay in place of the reconfigurable intelligent service that receives packets from one transceiver on one communication interface and forwards them to at least one other transceiver. This solution increases latency, may use additional spectrum, uses additional energy, and may require multiple hardware interfaces.

Further, the presented approach allows to avoid the initiation of beam search procedures once the wireless "Line-of-site <LOS>"-communication path is blocked or deteriorated. Beam searching causes unnecessary wireless interference and reduces the number of resources available for communication. Instead, the proposed approach allows to create communication or signal paths in a controlled manner, increasing the overall efficiency on the wireless communication network.

The context information about the upcoming blockade or deterioration of the wireless "Line-of-site <LOS>"-communication path becomes available at the transceiver. Such information can be obtained from an external sensor, e.g., a camera, that monitor the physical environment as disclosed in https://arxiv.org/pdf/2010.06188v1.pdf and illustrated in the FIGURE 2.

Before the blockade or the deterioration occurs, the transceiver affected by the blockade or the deterioration gets according to the claim 7 from a control facility, which could be part of a cloud- or edge-based management system, e.g., Digital Twin or base station controller, according to the claims 12 and 13, the deployment of the controllable appliance functioning as the electromagnetic mirror including the reconfigurable intelligent surface.

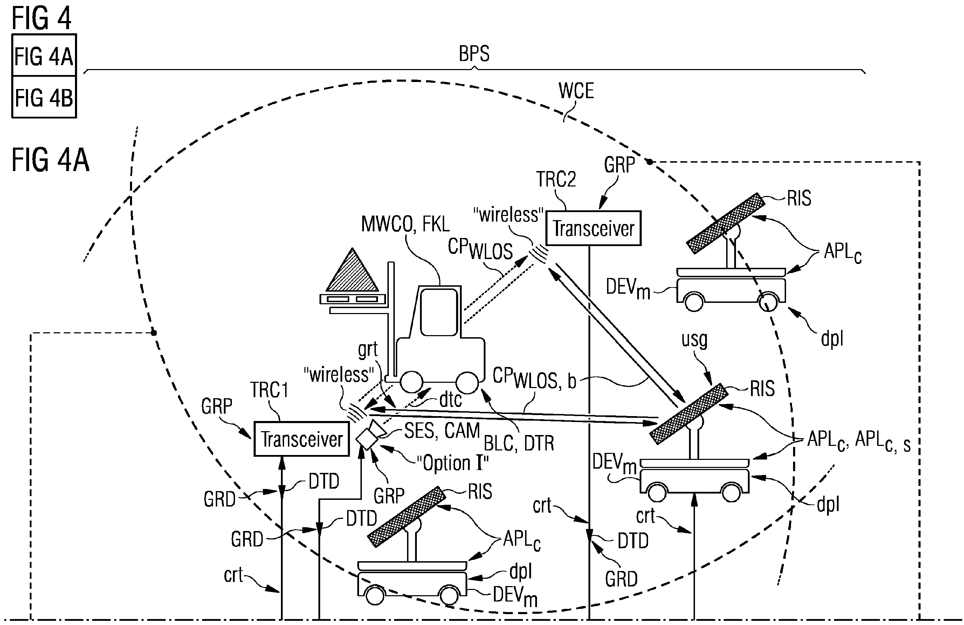

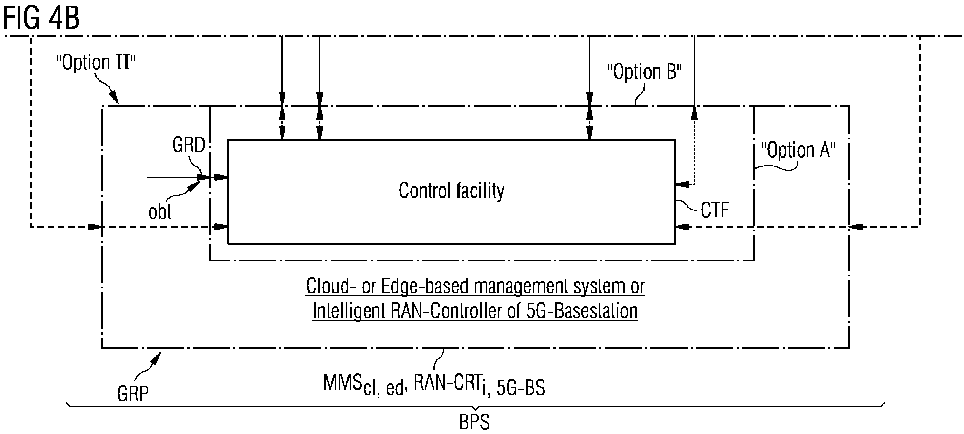

The control facility selects a controllable appliance from a pool of controllable appliances to be most suitable for bypassing the blocked or deteriorated wireless "Line-of-site <LOS>"-communication path and instructs or controls the selected controllable appliance, unless the appliance is mounted preferably on a mobile device to be moveable (cf. claims 2, 3, 8 and 9) to a certain location, where preferably for the duration of the blockade or deterioration an indirect wireless "Line-of-site <LOS>"-communication path, the two backup wireless "Line-of-site <LOS>"-communication paths, around the blockade or deterioration is created by adjusting electrical and mechanical parameters of the reconfigurable intelligent surface accordingly (cf. FIGURE 4).

And in addition, the control facility instructs or controls the two transceiver such that they adjust their beamforming to use this newly created indirect wireless "Line-of-site <LOS>"-communication path before the direct wireless "Line-of-site <LOS>"-communication path is blocked or deteriorated, hence avoiding service interruption.

Further advantages of the invention arise out of the dependent claims.

So according to the claims 2 and 8 it is beneficial to increase the flexibility for bypassing the blockade or deterioration of the wireless "Line-of-site <LOS>"-communication path that the at least one controllable appliance is moveable and thus being controllable accordingly to find a position within the wireless communication environment of the two transceiver being the most suitable for the bypassing.

To realize this movability, it is advantageous according to the claims 3 and 9 that the at least one controllable appliance is mounted each on a mobile device, such as an "Automated Guided Vehicle <AGV>", a drone, a forklift.

Alternatively, according to the claims 4 and 10 it is also possible that the at least one controllable appliance is mounted each to a wall or ceiling thereby moving along on rails or moving on wires .

In contrast to the movability increasing the flexibility for bypassing the blockade or deterioration of the wireless "Line-of-site <LOS>"-communication path it is also possible where the flexibility is not necessary that according to the claims 5 and 11 the at least one controllable appliance is mounted at a fixed place or location in the wireless communication environment, such as mounted to walls, ceilings and/or machines of a factory.

Finally, to inform about the upcoming blockade or deterioration of the wireless "Line-of-site <LOS>"-communication path it is beneficial according to the claims 6 and 12 that the generation data being generated is either <"OPTION I"> detected in the form of detection data, such as by means of a sensor, by monitoring the wireless communication environment of the two transceiver communicating via the wireless "Line-of-site <LOS>"-communication path or <"OPTION II"> obtained from <**i**> a cloud-or edge-based management system, such as an "Automated Guided Vehicle <AGV>" fleet management system, a Digital Twin of a factory or a building or <**ii**> an intelligent "Radio Access Network <RAN>"-controller of a 5G-Base Station, and based on information about the wireless communication environment of two transceiver communicating via the wireless "Line-of-site <LOS>"-communication path and their dynamic environmental changes provided by the cloud-or edge-based management system or the intelligent "Radio Access Network <RAN>"-controller of a 5G-Base Station.

Moreover, advantageous further developments of the invention arise out of the following description of a preferred embodiment of the invention based on the FIGURES 1 to 3 according to FIGURES 4 to 6. They show:
FIGURE 4 a bypass-system bypassing blockades or deteriorations of wireless "Line-of-site <LOS>"-communication paths,
FIGURE 5 a setup of a controllable appliance functioning as an electromagnetic mirror mounted on a mobile device to be moveable to find a position being the most suitable for the bypassing in the context of the bypass-system according to the FIGURE 4,
FIGURE 6 an alternative setup of a controllable appliance functioning as an electromagnetic mounted to a wall or ceiling thereby moving along on rails in the context of the bypass-system according to the FIGURE 4.

FIGURE 4 shows a bypass-system BPS for bypassing blockades or deteriorations of wireless "Line-of-site <LOS>"-communication paths concerning a wireless communication scenario based on the FIGURES 2 and 3, where a wireless "Line-of-site <LOS>"-communication path CP_{WLOS}, via which two transceiver TRC1, TRC2 communicate with each other within a wireless communication environment WCE of the two transceiver TRC1, TRC2, preferably given again by an overlap area of two radio ranges of the transceivers TRC1, TRC2, and where the wireless communication between the two transceiver TRC1, TRC2 is interrupted or disturbed by a moveable wireless communication obstacle MWCO, which could be any solid object like a pedestrian, any vehicle like a forklift FKL, foliage of trees and atmospheric conditions like rain, fog, etc., and is given in the present case again (as in the FIGURES 2 and 3) by the forklift FKL. The moveable wireless communication obstacle MWCO respectively the forklift FKL constitute a blockade BLC or a deterioration DTR for the wireless "Line-of-site <LOS>"-communication path CP_{WLOS} used by the two transceiver TRC1, TRC2.

The task of the bypass-system BPS is now to preemptively bypass the blockade BLC or deterioration DTR of the wireless "Line-of-site <LOS>"-communication path CP_{WLOS} caused by the moveable wireless communication obstacle MWCO respectively the forklift FKL as soon as it is upcoming before the wireless "Line-of-site <LOS>"-communication is getting lost accordingly.

For this purpose, the bypass-system BPS includes a generating part GRP generating grt generation data GRD about the upcoming blockade BLC or the deterioration DTR, at least one - according to the FIGURE 4 there are for example three - controllable appliance APL_{c}, APL_{c,s} is deployed dpl functioning as an electromagnetic mirror including each the well-known reconfigurable intelligent surface RIS according to the prior art document https://arxiv.org/pdf/1906.09490.pdf, which is used usg to overcome the upcoming blockade BLC or deterioration DTR of the wireless "Line-of-site <LOS>"-communication path CP_{WLOS}, and being adjustable in direction to the two transceiver TRC1, TRC2 and a control facility CTF, which form within the bypass-system BPS a functional unit for preemptively bypassing the upcoming blockade BLC or deterioration DTR of the wireless "Line-of-site <LOS>"-communication path CP_{WLOS} caused by the moveable wireless communication obstacle MWCO respectively the forklift FKL, when the upcoming blockade BLC or deterioration DTR is announced itself (cf. FIGURE 2).

According to this functional unit the control facility CTF is connected to the generating part GRP, the two transceiver TRC1, TRC2 and the at least one controllable appliance APL_{c}, APL_{c,s}. In a nutshell the functional unit formed within the bypass-system BPS is designed such that two backup wireless "Line-of-site <LOS>"-communication paths CP_{WLOS,b} are created to bypass blocked BLC or deteriorated DTR the wireless "Line-of-site <LOS>"-communication path CP_{WLOS}.

In this context the generating part GRP of the bypass-system BPS generating grt the generation data GRD about the upcoming blockade BLC or deterioration DTR of the wireless "Line-of-site <LOS>"-communication path CP_{WLOS} can be realized in different ways. According to a first "OPTION I" the generating part GRP - in accordance with the FIGURE 2 - is a detection unit DTU, such as a sensor SES or a camera CAM, detecting dtc detection data DTD - as the generated grt generation data GRD - by monitoring the wireless communication environment WCE of the two transceiver TRC1, TRC2 communicating via the wireless "Line-of-site <LOS>"-communication path CP_{WLOS}.

Besides that, it also possible according to the non-patent literature https://www.vde.com/resource/blob/2108086/e9ead7b7c95eacb5cb7f2eb88103eaa9/joint-communication---sensing-position-paper-pdf-file-data.pdf that the detection could also be done with the same wireless transceiver that is used for the wireless "Line-of-site <LOS>"-communication. It could be even that parts of the signal emitted for communication are used for the detection according to an integrated/joint communication and sensing. In the FIGURE 4 this is depicted such that the transceiver TRC1, TRC2 belongs in this case to the generating part GRP generating grt by detecting dtc the generation data GRD respectively the detection data DTD.

Alternatively, according to a second "OPTION II" the generating part GRP can be realized either as a cloud-or edge-based management system MMS_{cl,ed}, such as an "Automated Guided Vehicle <AGV>" fleet management system, a Digital Twin of a factory or a building or as an intelligent "Radio Access Network <RAN>"-controller of a 5G-Base Station RAN-CRT_{i,5G-BS}, from which based on information about the wireless communication environment WCE of the two transceiver TRC1, TRC2 communicating via the wireless "Line-of-site <LOS>"-communication path CP_{WLOS} and their dynamic environmental changes the generation data GRD is obtained obt.

According to this second "OPTION II" it is now possible that either are each separated system components of the bypass-system BPS ("OPTION A") or the control facility CTF is part of the cloud-or edge-based management system MMS_{ci,ed} or the intelligent "Radio Access Network <RAN>"-controller of a 5G-Base Station RAN-CRT_{i,5G-BS} ("OPTION B") .

In the context of the bypass-system BPS the control facility CTF controls crt based on the generation data GRD, DTD firstly the two transceiver TRC1, TRC2 affected in their communication via the wireless "Line-of-site <LOS>"-communication path CP_{WLOS} by the upcoming blockade BLC or deterioration DTR and secondly a selected controllable appliance APL_{c,s} selected by the control facility CTF out of the at least one controllable appliance APL_{c}, APL_{c,s} to be most suitable for bypassing the wireless "Line-of-site <LOS>"-communication path CP_{WLOS}.

This generation data-based controlling is carried out such that between the two transceiver TRC1, TRC2 via the selected controllable appliance APL_{c,s} the already mentioned two backup wireless "Line-of-site <LOS>"-communication paths CP_{WLOS,b} are set up by the two transceiver TRC1, TRC2 instead of the upcoming blocked BLC or deteriorated DTR wireless "Line-of-site <LOS>"-communication path CP_{WLOS} for a limited time. Preferably, the two backup wireless "Line-of-site <LOS>"-communication paths CP_{WLOS,b} are set up for the duration of the blockade BLC or deterioration DTR.

In a preferred embodiment or shaping the at least one controllable appliance APL_{c}, APL_{c,s} can be mounted each on a mobile device DEVₘ to be moveable and thus being controllable accordingly to find a position within the wireless communication environment WCE of the two transceiver TRC1, TRC2 being the most suitable for bypassing the (upcoming) blocked BLC or deteriorated DTR wireless "Line-of-site <LOS>"-communication path CP_{WLOS}. This device can be for example an "Automated Guided Vehicle <AGV>", a drone or a forklift.

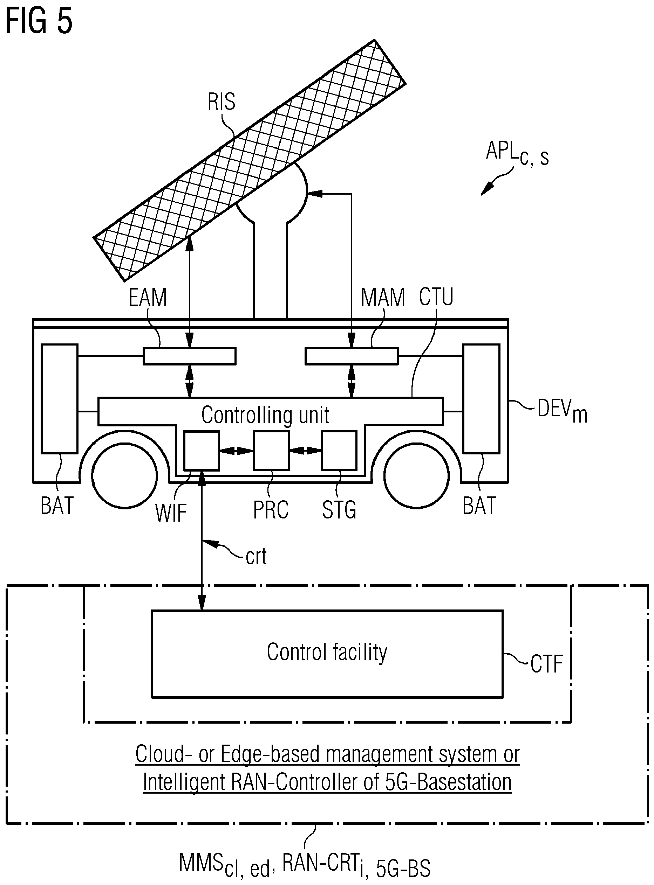

FIGURE 5 shows a setup of the selected controllable appliance APL_{c,s} including the reconfigurable intelligent surface RIS and functioning as the electromagnetic mirror mounted on the mobile device DEVₘ to be moveable to find a position being the most suitable for the bypassing in the context of the bypass-system BPS according to the FIGURE 4.

In this context to adjust the selected controllable appliance APL_{c,s} in direction to the two transceiver TRC1, TRC2 such that between the two transceiver TRC1, TRC2 via the selected controllable appliance APL_{c,s} the two backup wireless "Line-of-site <LOS>"-communication paths CP_{WLOS,b} can be set up by the two transceiver TRC1, TRC2 the selected controllable appliance APL_{c,s} is controlled crt by the control facility CTF outside of the cloud-or edge-based management system MMS_{ci,ed} or the intelligent "Radio Access Network <RAN>"-controller of a 5G-Base Station RAN-CRT_{i,5G-BS} ("OPTION A") or inside of the cloud-or edge-based management system MMS_{ci,ed} or the intelligent "Radio Access Network <RAN>"-controller of a 5G-Base Station RAN-CRT_{i,5G-BS} ("OPTION B") .

The selected controllable appliance APL_{c,s} mounted on the mobile device DEVₘ includes in the mobile device DEVₘ a control unit CTU, electronic adjustment means EAM, mechanical adjustment means MAM and at least one battery or accumulator BAT as power supply connected to the control unit CTU, the electronic adjustment means EAM and the mechanical adjustment means MAM. Moreover, due to the battery or accumulator BAT the mobile device DEVₘ can autonomously travel to an assigned location.

The reconfigurable intelligent surface RIS can be used to programmatically reflect electro-magnetic waves by means of electronic steering via the electronic adjustment means EAM. In addition, the mobile device DEVₘ has the mechanical adjustment means MAM for the adjustment of the horizontal and vertical angle as well as the height of the reconfigurable intelligent surface RIS and for moving the mobile device DEVₘ.

Both, the electronic or programmatic adjustments and the mechanical adjustments of the reconfigurable intelligent surface RIS and the mobile device DEVₘ are adjusted by the control facility CTF via the controlling unit CTU.

For this purpose, the control unit CTU on one side is connected with the electronic adjustment means EAM and the mechanical adjustment means MAM and on the other side includes a processor PRC, which consists of processing capabilities, a wireless interface WIF and a memory or storage STG, wherein the processor PRC is connected to the wireless interface WIF and the storage STG.

The control flow goes from the control facility CTF, for example on a logical communication channel, via the wireless interface WIF to the processor PRC of the controlling unit CTU and from there via the electronic adjustment means EAM and the mechanical adjustment means MAM to the reconfigurable intelligent surface RIS and the part of the mobile device DEVₘ to be controlled accordingly, e.g., by commands to navigate the mobile device DEVₘ and to adjust the reflection angle of the reconfigurable intelligent surface RIS.

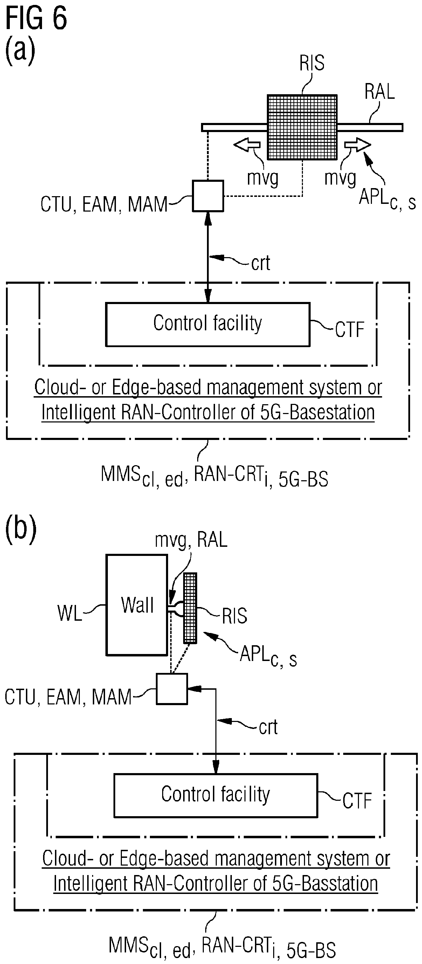

FIGURE 6 shows in a front view FIGURE 6 (a) and in a side view FIGURE 6 (b) based on and in contrast to the FIGUR 5 an alternative setup of the selected controllable appliance APL_{c,s} including the reconfigurable intelligent surface RIS and functioning as the electromagnetic mirror mounted to a wall WL or ceiling thereby moving mvg along on rails RAL in the context of the bypass-system according to the FIGURE 4.

Moreover, as a further alternative it is also possible that the selected controllable appliance APL_{c,s} is mounted at a fixed place or location in the wireless communication environment WCE, such as mounted to walls WL, ceilings and/or machines of a factory.

## Claims

1. Method for bypassing blockades or deteriorations of wireless "Line-of-site <LOS>"-communication paths, by
**a**) generating (grt) generation data (GRD) about an upcoming blockade (BLC) or deterioration (DTR), in particular caused by a moveable wireless communication obstacle (MWCO) such as solid objects like pedestrians, vehicles like a forklift (FKL), foliage of trees and atmospheric conditions like rain, fog, etc., of a wireless "Line-of-site <LOS>"-communication path (CP_{WLOS}) within a wireless communication environment (WCE) of two transceiver (TRC1, TRC2) communicating via the wireless "Line-of-site <LOS>"-communication path (CP_{WLOS}), when the upcoming blockade (BLC) or deterioration (DTR) is announced itself,
**b**) using (usg) a reconfigurable intelligent surface (RIS) to overcome the upcoming blockade (BLC) or deterioration (DTR) of the wireless "Line-of-site <LOS>"-communication path (CP_{WLOS}),
**characterized by**:
**c**) deploying (dpl) at least one controllable appliance (APL_{c}, APL_{c,s}) functioning as an electromagnetic mirror
- including each the reconfigurable intelligent surface (RIS) and
- being adjustable in direction to the two transceiver (TRC1, TRC2),
**d**) controlling (crt) based on the generation data (GRD) <**i**> the two transceiver (TRC1, TRC2) affected in their communication via the wireless "Line-of-site <LOS>"-communication path (CP_{WLOS}) by the upcoming blockade (BLC) or deterioration (DTR) and <**ii**> a selected controllable appliance (APL_{c,s}) of the at least one controllable appliance (APL_{c}, APL_{c,s}) to be most suitable for the bypassing such that between the two transceiver (TRC1, TRC2) via the selected controllable appliance (APL_{c,s}) two backup wireless "Line-of-site <LOS>"-communication paths (CP_{WLOS,b}) are set up instead of the upcoming blocked (BLC) or deteriorated (DTR) wireless "Line-of-site <LOS>"-communication path (CP_{WLOS}) for a limited time, in particular for the duration of the blockade (BLC) or deterioration (DTR).

2. Method according to claim 1, **characterized in that** the at least one controllable appliance (APL_{c}, APL_{c,s}) is moveable and thus being controllable accordingly to find a position within the wireless communication environment (WCE) of the two transceiver (TRC1, TRC2) being the most suitable for the bypassing.

3. Method according to claim 2, **characterized in that** the at least one controllable appliance (APL_{c}, APL_{c,s}) is mounted each on a mobile device (DEVₘ), such as an "Automated Guided Vehicle <AGV>", a drone, a forklift.

4. Method according to claim 2, **characterized in that** the at least one controllable appliance (APL_{c}, APL_{c,s}) is mounted each to a wall or ceiling thereby moving (mvg) along on rails (RAL) or moving on wires.

5. Method according to claim 1, **characterized in that** the at least one controllable appliance (APL_{c}, APL_{c,s}) is mounted at a fixed place or location in the wireless communication environment (WCE), such as mounted to walls, ceilings and/or machines of a factory.

6. Method according to one of the claims 1 to 5, **characterized in that**
the generation data (GRD) being generated (grt) about the upcoming blockade (BLC) or deterioration (DTR) of the wireless "Line-of-site <LOS>"-communication path (CP_{WLOS}) is either <"OPTION I"> detected (dtc) in the form of detection data (DTD), such as by means of a sensor (SES) or camera (CAM), by monitoring the wireless communication environment (WCE) of the two transceiver (TRC1, TRC2) communicating via the wireless "Line-of-site <LOS>"-communication path (CP_{WLOS}) or <"OPTION II"> obtained (obt) from <**i**> a cloud-or edge-based management system (MMS_{cl,ed}), such as an "Automated Guided Vehicle <AGV>" fleet management system, a Digital Twin of a factory or a building or <**ii**> an intelligent "Radio Access Network <RAN>"-controller of a 5G-Basestation (RAN-CRT_{i,5G-Bs}), and based on information about the wireless communication environment (WCE) of the two transceiver (TRC1, TRC2) communicating via the wireless "Line-of-site <LOS>"-communication path (CP_{WLOS}) and their dynamic environmental changes provided by the cloud-or edge-based management system (MMS_{cl,ed}) or the intelligent "Radio Access Network <RAN>"-controller of a 5G-Basestation (RAN-CRT_{i,5G-BS}).

7. Bypass-system (BPS) for bypassing blockades or deteriorations of wireless "Line-of-site <LOS>"-communication paths, with
**a**) a generating part (GRP) generating (grt) generation data (GRD) about an upcoming blockade (BLC) or deterioration (DTR), in particular caused by a moveable wireless communication obstacle (MWCO) such as solid objects like pedestrians, vehicles like a forklift (FKL), foliage of trees and atmospheric conditions like rain, fog, etc., of a wireless "Line-of-site <LOS>"-communication path (CP_{WLOS}) within a wireless communication environment (WCE) of two transceiver (TRC1, TRC2) communicating via the wireless "Line-of-site <LOS>"-communication path (CP_{WLOS}), when the upcoming blockade (BLC) or deterioration (DTR) is announced itself,
b) a reconfigurable intelligent surface (RIS) being used (usg) to overcome the upcoming blockade (BLC) or deterioration (DTR) of the wireless "Line-of-site <LOS>"-communication path (CP_{WLOS}),
**characterized by**:
**c**) at least one controllable appliance (APL_{c}, APL_{c,s}) functioning as an electromagnetic mirror
- including each the reconfigurable intelligent surface (RIS) and
- being adjustable in direction to the two transceiver (TRC1, TRC2),
**d**) a control facility (CTF), which is connected to the generating part (GRP), the two transceiver (TRC1, TRC2) and the at least one controllable appliance (APL_{c}, APL_{c,s}), controls (crt) based on the generation data (GRD) <**i**> the two transceiver (TRC1, TRC2) affected in their communication via the wireless "Line-of-site <LOS>"-communication path (CP_{WLOS}) by the upcoming blockade (BLC) or deterioration (DTR) and <**ii**> a selected controllable appliance (APL_{c,s}) selected by the control facility (CTF) out of the at least one controllable appliance (APL_{c}, APL_{c,s}) to be most suitable for the bypassing such that between the two transceiver (TRC1, TRC2) via the selected controllable appliance (APL_{c,s}) two backup wireless "Line-of-site <LOS>"-communication paths (CP_{WLOS,b}) are set up by the two transceiver (TRC1, TRC2) instead of the upcoming blocked (BLC) or deteriorated (DTR) wireless "Line-of-site <LOS>"-communication path (CP_{WLOS}) for a limited time, in particular for the duration of the blockade (BLC) or deterioration (DTR).

8. Bypass-system (BPS) according to claim 7, **characterized in that**
the at least one controllable appliance (APL_{c}, APL_{c,s}) is moveable and thus being controllable accordingly to find a position within the wireless communication environment (WCE) of the two transceiver (TRC1, TRC2) being the most suitable for the bypassing.

9. Bypass-system (BPS) according to claim 8, **characterized in that**
the at least one controllable appliance (APL_{c}, APL_{c,s}) is mounted each on a mobile device (DEVₘ), such as an "Automated Guided Vehicle <AGV>", a drone, a forklift.

10. Bypass-system (BPS) according to claim 8, **characterized in that**
the at least one controllable appliance (APL_{c}, APL_{c,s}) is mounted each to a wall (WL) or ceiling thereby moving (mvg) along on rails (RAL) or moving on wires.

11. Bypass-system (BPS) according to claim 7, **characterized in that**
the at least one controllable appliance (APL_{c}, APL_{c,s}) is mounted at a fixed place or location in the wireless communication environment (WCE), such as mounted to walls (WL), ceilings and/or machines of a factory.

12. Bypass-system (BPS) according to one of the claims 7 to 11, **characterized in that**
the generating part (GRP) generating (grt) the generation data (GRD) about the upcoming blockade (BLC) or deterioration (DTR) of the wireless "Line-of-site <LOS>"-communication path (CP_{WLOS}) is designed either <"OPTION I"> as a detection unit (DTU), such as a sensor (SES) or camera (CAM), detecting (dtc) detection data (DTD) by monitoring the wireless communication environment (WCE) of the two transceiver (TRC1, TRC2) communicating via the wireless "Line-of-site <LOS>"-communication path (CP_{WLOS}) or <"OPTION II"> as <**i**> a cloud-or edge-based management system (MMS_{cl,ed}), such as an "Automated Guided Vehicle <AGV>" fleet management system, a Digital Twin of a factory or a building or <**ii**> an intelligent "Radio Access Network <RAN>"-controller of a 5G-Basestation (RAN-CRT_{i,5G-BS}), from which based on information about the wireless communication environment (WCE) of the two transceiver (TRC1, TRC2) communicating via the wireless "Line-of-site <LOS>"-communication path (CP_{WLOS}) and their dynamic environmental changes the generation data (GRD) is obtained (obt).

13. Bypass-system (BPS) according to claim 12, **characterized in that**
the control facility (CTF) is part of the cloud-or edge-based management system (MMS_{cl,ed}) or the intelligent "Radio Access Network <RAN>"-controller of a 5G-Basestation (RAN-CRT_{i,5G-BS}).
